# EUROPÄISCHE PATENTSCHRIFT

(11) **EP 2 004 350 B1**
(45) Veröffentlichungstag und Bekanntmachung des Hinweises auf die Patenterteilung: **11.05.2011**
(21) Anmeldenummer: 07726853.0
(22) Anmeldetag: 13.03.2007
(51) Int. Cl.: B23B 27/16

(54) **UNTERLEGPLATTE FÜR DOPPELSEITIGE WENDESCHNEIDEINSÄTZE**
SUBSTRATE PLATE FOR DOUBLE-SIDED INDEXABLE CUTTING INSERTS
CALE D'EPAISSEUR POUR GARNITURES AMOVIBLES DE LAME DOUBLE FACE

(30) Priorität: 10.04.2006 DE 102006017074
(43) Veröffentlichungstag der Anmeldung: 24.12.2008
(73) Patentinhaber: WALTER AG, 72072 Tübingen (DE)
(72) Erfinder: CARL, Hans-Georg, 72119 Ammerbuch-Entringen (DE)
(74) Vertreter: Lieke, Winfried
(86) Internationale Anmeldenummer: PCT/EP2007/052351
(87) Internationale Veröffentlichungsnummer: WO 2007/115883

(56) Entgegenhaltungen:
- DE-A1- 19 653 921

## Beschreibung

Die vorliegende Erfindung betrifft eine Kombination aus einer Unterlegplatte und einem doppelseitigen Wendeschneideinsatz, wobei der Wendeschneideinsatz in einem Sitz eines Werkzeugges aufnehmbar und fixierbar ist und die Unterlegplatte dabei zwischen dem Wendeschneideinsatz und einer Fläche des Sitzes liegt, wobei der Wendeschneideinsatz auf der Unterlegplatte in dem Sitz zu fixieren ist und wobei die Unterlegplatte eine plattenartige Grundform mit einem runden oder polygonalen Umriß und einer unteren, auf einer Fläche des Sitzes auflegbaren, im allgemeinen ebenen Auflagefläche und einer oberen, den Wendeschneideinsatz tragenden Stützfläche hat, wobei Auflagefläche und Sitzfläche durch den Umfang der Untertegplatte definierende Seitenwände miteinander verbunden sind und wobei der Wendeschneideinsatz ein Innerhalb der Schneidkanten und im Abstand von diesen liegendes, durch eine oder mehrere Auflageflächen definiertes Plateau aufweist und die Schneidkanten des Wendeschneideinsatzes von einer gedachten Mittelebene, welche die beiden Seiten des doppelseitigen Wendeschneideinsatzes voneinander trennt, einen variierenden Abstand haben.

Weiterhin betrifft die vorliegende Erfindung auch ein entsprechendes Werkzeug, welches mit mindestens einem Sitz für die Aufnahme einer Unterlegplatte sowie einer Kombination aus Unterlegplatte und Schneideinsatz der vorstehend genannten Art ausgestattet ist.

Eine entsprechende Unterlegplatte, ein entsprechender Schneideinsatz und auch ein entsprechendes Werkzeug sind aus der DE 196 53 921 bekannt.

Aus dem europäischen Patent Nr. 0 501 410 B1 sind ebenfalls Unterlagen für doppelseitige Schneideinsätze bekannt, wobei zwischen einer Unterlegplatte und dem Schneideinsatz eine zusätzliche Schicht aus einem weicheren Material angeordnet ist, die über die gesamte Stützfläche und die gesamte, entsprechend zugewandte Auflagefläche des Schneideinsatzes hinweg mit Untertegplatte und Schneideinsatz in Kontakt steht.

Aus der deutschen Patentschrift Nr. 103 17 760 B4, deren inhaberin gleichzeitig Anmelderin der vorliegenden Erfindung ist, ist ein Schneideinsatz bekannt, der dort allerdings ohne Verwendung einer Unterlegplatte beschrieben ist, ansonsten aber in bevorzugten Ausführungsformen der vorliegenden Erfindung ebenfalls Verwendung findet

Die aus der DE 196 53 921 bekannte Unterlegplatte entspricht in ihrer Umrißform weitgehend den Umrissen eines (eine Befestigungsbohrung umgebenden) zentralen Plateaus der Auflagefläche des Wendeschneideinsatzes; insbesondere die oberen Kanten der Unterlegplatte haben einen relativ großen lichten Abstand zu den ihnen nächstliegenden Schneidkanten auf der der Unterlegplatte zugewandten Seite des Wendeschneideinsatzes. Die Umfangskontur des Wendeschnekieinsatzes steht deutlich über die Umfangskontur der zugehörigen Unterlegplatte hervor. Dies bedeutet, daß bei einer spanenden Bearbeitung mit Hilfe entsprechender Schneideinsätze, die auf der der Unterlegplatte zugewandten Seite liegenden Schneidkanten des Schneideinsatzes relativ ungeschützt den durch die aktive Schneidkante erzeugten und mitunter unkontrolliert umherfliegenden Spänen ausgesetzt sind. Derartige Späne, die relativ hart sein können, können während der Bearbeitung heftig auf nicht aktive Schneidkantenbereiche einwirken und zu Ausbrüchen der harten aber vergleichsweise spröden Schneidkanten führen.

Bei dem aus der EP 0 501 410 bekannten System wird diese Gefahr dadurch etwas abgemildert, daß die nicht aktiven, der Unterlegplatte zugewandten Schneidkantenbereiche mit einer zusätzlich eingefügten Zwischenschicht aus einem weicheren Material in Kontakt stehen. Allerdings wird dieses Material nicht unter dem Gesichtspunkt des Schutzes der zugewandten Kanten ausgewählt, sondern wird zur Dämpfung von Stoßbelastungen bewußt weich gewählt und ist beispielsweise Kupfer oder Aluminium. Dieses Material ist gegenüber dem Material des Schneideinsatzes so weich, so daß es bei der Beaufschlagung durch die nicht aktiven Schneidkantenbereiche, die an dem weichen Material anliegen, relativ leicht durch heftig aufschlagende Späne verformt und weggedrückt wird und dabei dennoch die angrenzenden, nicht aktiven Schneidkantenbereiche beschädigt werden können. Das welche Material ist insbesondere auch nicht zum Schutz der daran unmittelbar angrenzenden, nicht aktiven Schneidkantenbereiche vorgesehen, sondern soll lediglich Stöße und Vibrationen, die sich auf den Verschleiß der aktiven Schneidkante auswirken, stärker dämpfen. Darüber hinaus hat eine solche weiche Materialschicht den großen Nachteil, daß dadurch der Sitz und die Position des Schneideinsatzes nicht ausreichend exakt definiert wird und vor allem während des Betriebs unter Umständen nicht erhalten bleibt, weil aufgrund der auf den Schneideinsatz wirkenden, einseitigen Kräfte, auch das weiche Material darunter entsprechend nachgibt, so daß der Schneideinsatz verkantet und sich die Position seiner aktiven Schneidkante verschiebt.

Die DE 103 17 760 B4 offenbart zwar Schneideinsätze, die durch eine innerhalb der Schneideinsätze und der Spanformungsstrukturen angeordnete ebene Auflagefläche getragen werden, die bezüglich einer gedachten Mittelebene durch den Schneideinsatz auf einem tieferen Niveau liegt als die Schneidkanten und insbesondere auf einem tieferen Niveau als die Eckbereiche der Schneidkanten, jedoch ist bei dem entsprechenden Werkzeug wiederum nur eine Sitzfläche ohne Unterlegplatte vorgesehen, deren Konturen lediglich den Bereich der zentralen Auflageflächen erfassen und die nicht aktiven Schneidkanten, auf der der aktiven Seite des Schneideinsatzes gegenüberliegenden Seite ungeschützt lassen.

Gegenüber diesem Stand der Technik liegt der vorliegenden Erfindung die Aufgabenstellung zugrunde, Kombination aus Unterlegplatten und Wendeschneidplatten sowie entsprechende Werkzeuge bereitzustellen, welche einen sehr präzisen Sitz der Wendeschneidplatte gewährleisten und dennoch auch die Schneidkanten auf der der Unterlegplatte zugewandten Seite des Schneideinsatzes vor einer nachteiligen Beaufschlagung und Beschädigung durch auftreffende Späne besser schützen.

Hinsichtlich der eingangs genannten Kombination aus Unterlegplatte und Wendeschneideinsatz wird die der Erfindung zugrunde liegende Aufgabe dadurch gelöst, daß die oberen Kanten der Unterlegplatte und die Schneidkanten auf der der Unterlegplatte zugewandten Seite des Wendeschneideinsatzes mindestens in dem Bereich unterhalb einer aktiven Schneidkante und in den daran angrenzenden Bereichen einen Abstand von höchstens 0,5 mm voneinander und einen variierenden Abstand zu der Ebene des Plateaus haben, wobei die oberen Kanten der Unterlegplatte einem Negativ des Schneidkantenverlaufs des damit zu stützenden Schneideinsatzes entsprechen.

Dieser enge Abstand zwischen den oberen Kanten einer Unterlegplatte und den diesen oberen Kanten unmittelbar gegenüberliegenden, nicht aktiven Schneidkanten mindestens unterhalb bzw. in der Nähe der darüber liegenden, aktiven Schneidkantenbereiche führt dazu, daß etwaige Späne, die im Bereich der nicht aktiven, auf der der aktiven Seite gegenüberliegenden Seite der oberen Kante derselben auftreffen, die In der Nähe der nicht aktiven Schneidkante liegt. Damit sind diese nicht aktiven Schneidkanten relativ gut abgedeckt und werden durch erheblich geringe Kräfte beaufschlagt, die auch nicht auf den gesamten, relativ empfindlichen Kantenbereich und vor allem nicht punktuell auf den sehr kleinen Kantenradius auftreffen können, sondem im wesentlichen nur auf die an die Schneidkanten angrenzende Seitenfläche des Schneideinsatzes und gleichzeitig auf die Seitenfläche der darunterliegenden Unterlegplatte auftreffen. Der Abstand zwischen den Schneidkanten und den oberen Kanten wird dabei vorzugsweise unter 0,3 und besonders bevorzugt sogar unter 0,2 mm gehalten und in der Praxis läßt sich ein Abstand ohne Gefahr eines Berührungskontaktes zwischen Schneidkanten und oberen Kanten der Unterlegplatte von etwa 0,15 mm ohne weiteres realisieren.

Wenn dieser Abstand zwischen den oberen Kanten der Unterlegplatte und den Schneidkanten des Wendeschneideinsatzes entsprechend gering gehalten werden soll, erreicht man dies zweckmäßigerweise dadurch, daß Wendeschneideinsatz und Unterlegplatte im wesentlichen dieselben Umfangsmaße haben, wobei allerdings die Eckenradien eine gewisse Ausnahme bilden können. Vorzugsweise sind nämlich die Eckenradien der Unterlegplatte entweder gleich wie die Eckenradien der zugehörigen Schneideinsätze, oder aber um bis zu 100 % größer als die Eckradien des zugehörigen Wendeschneideinsatzes. Beispielsweise können die Eckenradien eines Wendeschneideinsatzes zwischen 0,1 mm und 2 mm betragen, wohingegen die Ekkenradien der zugehörigen Unterlegplatte zwischen 0,2 und 3 mm liegen sollten und bei größeren Radien zwar identisch sein können mit den Eckenradien der Wendeschneideinsätze, insbesondere aber bei besonders kleinen Eckenradien eines Wendeschneideinsatzss tendenziell eher größer sind und unter Umständen auch mehr als 100 % größer sein können als die Eckenradien des zugehörigen Wendeschneideinsatzes.

Weiterhin ist die Stützfläche der Unterlegplatte in der bevorzugten Ausführungsform der Erfindung so an einen entsprechenden Wendeschneideinsatz angepaßt, daß die Auflagefläche des Wendeschneideinsatzes und die Stützfläche der Unterlegplatte nur im Bereich der erwähnten Plateaus miteinander in (tragendem) Kontakt stehen. Eine leichte Berührung auch anderer Bereiche muß dabei nicht zwingend ausgeschlossen sein, sollte aber nach Möglichkeit dennoch vermieden werden, indem die Maße der aneinander gegenüberliegenden Flächen so gewählt werden, daß auch bei ungünstigster Addition von Toleranzen ein Kontakt in Bereichen außerhalb der erwähnten Plateauflächen so gut wie ausgeschlossen ist, auch wenn es bevorzugt ist, daß die Stützfläche und die entsprechend zugewandte Seite des Wendeschneidelnsatzes auch im Bereich außerhalb der Plateaus einen lichten Abstand von höchstens 0,5 mm zueinander haben. Dieser maximale lichte Abstand kann unter Umständen auch auf bis zu 0,3 mm reduziert werden.

Gemäß einer Ausfürhungsform der Erfindung ist vorgesehen, daß im Eckbereich einer polygonalen Unterlegplatte und dem entsprechenden Eckbereich des Wendeschneideinsatzes die Schneidkante des Wendeschneideinsatzes gegenüber der darunterliegenden Ecke der Unterlegplatte um maximal 0,5 mm, vorzugsweise maximal 0,3 mm und besonders bevorzugt maximal 0,2 mm übersteht.

Was die sonstigen Außenmaße und Konturen von Unterlegplatte und Schneideinsatz angeht, so wäre es ohne Nachteil in der Anwendung denkbar, auch die Seitenflächen der Unterlegplatte gegenüber den Seitenflächen des Schneideinsatzes geringfügig überstehen zu lassen, z. B. um bis zu 0,5 mm, vorzugsweise um maximal 0,2 mm. Dies schließt selbstverständlich nicht aus, daß die Maße der Umrisse der Unterlegplatte statt dessen genau den Umrissen des Schneideinsatzes angepaßt sind oder möglicherweise auch um bis zu 0,2 mm gegenüber den Umrissen des Wendeschneideinsatzes zurückversetzt sind, auch wenn letzteres nicht bevorzugt ist, liegt es dennoch aber im Rahmen der allgemeinen Definition der vorliegenden Erfindung.

Ebenso wie bei der Unterlegplatte kann auch bei dem entsprechenden Wendeschneideinsatz das Plateau der Auflagefläche definiert sein durch mindestens drei voneinander beabstandete, ebene Flächenabschnitte, die zwischen dem Zentrum des Wendeschneideinsatzes und den Schneidkanten des Wendeschneideinsatzes und im Abstand von diesen Schneidkanten angeordnet sind und die durch tiefer liegende Bereiche der Auflagefläche voneinander getrennt sind. Dies führt im Ergebnis zu denselben Vorteilen einer stabilen, wohl definierten Auflageebene, wie es bereits im Zusammenhang mit der entsprechenden Unterlegplatte erwähnt wurde.

Dabei ist es besonders bevorzugt, wenn diese ebenen Flächenabschnitte jeweils dem Eckbereich eines polygonalen Umrisses zugeordnet sind. Vorzugsweise sind diese Eckbereiche dabei bezüglich einer Winkelhalbierenden der zugeordneten Ecke symmetrisch ausgebildet. Die Fläche jedes dieser Abschnitte sollte vorzugsweise ein Zehntel der gesamten oberen Fläche des Schneideinsatzes nicht überschreiten. Entsprechendes gilt für die Unterlegplatte, wenn diese entsprechende Stützflächen aufweist.

Die Stützfläche der Unterlegplatte weist ein im Abstand von den Seitenflächen angeordnetes Plateau auf, das parallel zu der unteren Auflagefläche verläuft, wobei die am Übergang zwischen den Seitenwänden und der Stützfläche gebildeten oberen Kanten der Unterlegplatte einen variierenden Abstand zu der Ebene der Auflagefläche haben, wobei die Unterlegplatte (10) in der Draufsicht auf die Stützfläche (2) einen polygonalen Umriß hat und die oberen Kanten (5) der Unterlegplatte (10) jeweils in den Eckbereichen (6) des polygonalen Umrisses den geringsten Abstand zur Ebene der Auflagefläche (1) haben und in den von den Ecken (6) des polygonalen Umrisses am weitesten entfernten Positionen der größten Abstand zur Ebene der Auflagefläche (1) haben...

Ein solcher Kantenverlauf der jeweils oberen Kanten der Unterlegplatte entspricht einem Negativ des Kantenverlaufs eines typischen Schneideinsatzes, bei welchem die Schneidkanten ind den Eckbereichen höher ausgebildet sind als entlang der Seitenflächen zwischen je zwei Ekken.

Dies bedeutet, daß die oberen Kanten der Unterlegplatte parallel zu den zugewandten, nicht aktiven Schneidkanten verlaufen und damit auch auf einen sehr engen Abstand zu diesen Schneidkanten einstellbar sind, was die Schneidkanten vor der Beaufschlagung mit Spänen schützt und was insbesondere verhindert, daß Späne zwischen Unterlegplatte und Schneideinsatz eindringen und dadurch die Spanformungsstrukturen und nicht aktiven Schneidkanten beschädigen. Es versteht sich, daß die der Unterlegplatte zugewandten nicht aktiven Schneidkanten und Spanformungsstrukturen sich nicht etwa auf der Unterlegplatte abstützen sollen, weil dies ebenfalls zu einer Beanspruchung und einem entsprechenden Verschleiß dieser Schneidkanten und Spanformungsstrukturen führt.

Gemäß der Erfindung hat die Unterlegplatte obere Kanten, die ganz oder überwiegend und zumindest in den Eckbereichen eines polygonalen Umrisses der Ebene der unteren Auflagefläche näher liegen als das Plateau. Dies entspricht der Ausgestaltung eines korrespondierenden Schneideinsatzes, bei welchem ein zentrales Auflageplateau überwiegend tiefer liegt als die umlaufenden Schneidkanten.

Dabei hat die Unterlegplatte eine ebene Auflagefläche, die auf eine entsprechende Sitzfläche im Sitz eines Werkzeuges auflegbar ist, während sie auf der gegenüberliegenden Seite ein zur unteren Auflagefläche paralleles Plateau hat, welches als Stützfläche für die entsprechenden Auflageflächen eines Schneideinsatzes dienen kann, wobei aber der Abstand der Ebene dieses Plateaus zu den oberen Kanten, die am Übergang zwischen Umfangsflächen und Stützfläche der Unterlegplatte gebildet werden, variiert.

Der Umriß einer solchen Unterlegplatte kann daher ohne weiteres den Konturen eines Wendeschneidelnsatzes angepaßt werden und die oberen Kanten können zu den gegenüberliegenden Schneidkanten eines auf der Unterlegplatte aufliegenden Schneideinsatzes einen korrespondierenden Verlauf haben. Eine insbesondere dadurch mögliche Anpassung der Außenkontur der Unterlegplatte an die Außenkonturen des Schneideinsatzes führt zu einer weitgehenden Bedeckung der Spanformungsstrukturen und auch der nicht aktiven Schneidkanten, die der Stützfläche der Unterlegplatte unmittelbar gegenüberliegen.

Wie bereits erwähnt, ist es bevorzugt, wenn die Unterlegplatte in etwa die gleiche Umfangskontur wie der damit zu stützende Schneideinsatz hat.

Besonders bevorzugt ist eine Unterlegplatte, welche entsprechend der Verwendung mit einem ebenfalls bevorzugten Schneideinsatz in der Draufsicht auf die Stützfläche einen polygonalen Umriß hat, wobei die oberen Kanten der Untertegplatte Jeweils in den Eckbereichen des polygonalen Umrisses den geringsten Abstand zur Ebene der Auflagefläche haben und in den von den Ecken des polygonalen Umrisses am weitesten entfernten Positionen den größten Abstand zur Ebene der Auflagefläche haben.

In diesem Zusammenhang sei erwähnt, daß auf dem Gebiet der Wendeschneideinsätze polygonale Formen in zahlreichen Varianten bekannt sind, wobei der Begriff polygonal nicht in einem strengen mathematischen Sinne verstanden wird, sondern sich vielmehr auf eine grundlegende polygonale Form bezieht, bei welcher die Eckbereiche abgerundet sein können und bei welcher üblicherweise nur Ecken mit Eckenwinkeln bis zu 150° als polygonale Eckbereiche angesehen werden, während Ecken mit größeren Eckenwinkeln als 150° üblicherweise nicht als "Ecken" sondern lediglich als "gebrochene Schneidkanten" apostrophiert werden, so daß die über einen solchen sehr stumpfwinkligen "Eckbereich" verlaufenden Schneidkanten als durchgehende und lediglich "gebrochene" Schneidkanten, nicht aber als Schneidecken oder Ecken der polygonalen Grundform betrachtet werden.

In einer weiteren bevorzugten Ausführungsform der Erfindung ist das Plateau der Stützfläche der Unterlegplatte definiert durch mindestens drei voneinander beabstandete, ebene Flächenabschnitte, die zwischen dem Zentrum der Unterlegplatte und den oberen Kanten der Unterlegplatte und im Abstand von den oberen Kanten angeordnet sind und die durch tieferliegende Bereiche der Stützfläche voneinander getrennt sind. Dabei reicht es aber aus, wenn die zwischen den ebenen Flächenabschnitten liegenden Bereiche der Stützfläche nur um ein sehr geringes Maß von 0,1 mm oder weniger tiefer liegen als die ebenen Flächenabschnitte, welche das Auflageplateau definierten. Drei voneinander beabstandete, ebene Flächenabschnitte garantieren eine sogenannte "Dreipunkt-Auflage", die eindeutig und stabil eine ebene Auflagefläche definieren.

Weiterhin ist eine Ausführungsform der Erfindung bevorzugt, bei welcher die Unterlegplatte eine zentrale Befestigungsbohrung aufweist, so daß die Unterlegplatte an einem eine entsprechende Gewindebohrung aufweisenden Werkzeugsitz befestigbar ist.

In einer bevorzugten Ausführungsform der Erfindung ist dabei für die Befestigung der Unterlegplatte eine Hohlschraube vorgesehen, die ein Innengewinde und ein Außengewinde hat, wobei letzteres in ein hierzu passendes Innengewinde in einer Bohrung in der Auflagefläche des Sitzes einschraubbar ist, um die Unterlegplatte in dem Sitz zu fixieren, während das Innengewinde der Hohlschraube für die Aufnahme einer Befestigungsschraube für den Wendeschneideinsatz vorgesehen ist, der dem entsprechend ebenfalls eine zentrale Befestigungsbohrung aufweisen sollte.

Darüber hinaus ist eine Ausführungsform der Erfindung bevorzugt, bei weicher die Unterlegplatte mindestens im Bereich der Stützflächen und der oberen Kanten und von dort durchgehend bis zur Auflagefläche ausschließlich aus einem einzigen, homogenen harten Material besteht, welches mindestens die Härte von Werkzeugstahl hat. Die Auflageplatte soll sich also nicht durch auf die Wendeschneidplatte einwirkende, stoßartige Kraft verformen oder nachgeben und es soll durch dieses Merkmal sichergestellt werden, daß während des laufenden Betriebs die Position und der Sitz des Wendeschneideinsatzes eindeutig und fest definiert bleibt und daß sich auch die relativen geometrischen Beziehungen zwischen Unterlegplatte und Wendeschneideinsatz nicht verändern.

Besonders bevorzugt ist eine Ausführungsform der Erfindung, bei welcher die Unterlegplatte vollständig aus einem Hartmetall besteht oder im wesentlichen vollständig zumindest in den vorstehend genannten Bereichen aus einem Hartmetall besteht. Dabei kann man jedoch auf Hartmetallqualitäten zurückgreifen, die nicht unbedingt den hohen Qualitäten der Wendeschneideinsätze entsprechen, sondern kann vielmehr solche Hartmetalle verwenden, bei denen die Formgebung und Einhaltung präziser Maße bei der Herstellung eventuell einfacher zu erzielen sind. Insbesondere wird eine solche Unterlegplatte nicht denselben Belastungen ausgesetzt wie eine Wendeschneidplatte, hat weniger empfindliche Geometrien, insbesondere im Bereich der oberen Kanten, und hat dementsprechend eine wesentlich längere Lebensdauer als entsprechende Wendeschnekieinsätze.

Hinsichtlich eines Werkzeuges der eingangs genannten Art wird die der Erfindung zugrunde liegende Aufgabe dadurch gelöst, daß das Werkzeug mindestens einen Sitz für die Aufnahme einer Unterlegplatte und eines Wendeschneideinsatzes aufweist, wie sie vorstehend aligemein und im Bezug auf bevorzugte Ausführungsformen erläutert wurden.

Eine besonders bevorzugte Ausführungsform der vorliegenden Erfindung betrifft ein als Drehmeißel ausgebildetes Werkzeug.

Weitere Vorteile, Merkmale und Anwendungsmöglichkeiten der vorliegenden Erfindung werden deutlich anhand der folgenden Beschreibung einer bevorzugten Ausführungsform und der dazu gehörigen Figuren. Es zeigen:
- Figur 1: eine Unterlegplatte in einem Sitz eines Drehmeißels,
- Figur 2: einen Wendeschneideinsatz auf einer erfindungsgemäßen Unterlegplatte, mon- tiert in dem Werkzeugsitz eines Drehmeißels und nochmals vergrößert ohne Drehmeißel getrennt dargesteilt,
- Figur 3: eine auseinandergezogene Zusammenbaudarstellung Im Schnitt durch einen Drehmeißel, eine Unterlegplatte, eine Wendeschneidplatte und zugehörigen Be- festigungsschrauben,
- Figur 4: eine Variante eines Wendeschneideinsatzes mit Doppelmulde auf einer ange- paßten Unterlegplatte und zusätzlich in in einem Drehmeißel montierten Zustand,
- Figur 5: eine perspektivische Explosionsdarstellung bzw. Zusammenbauzeichnung der Ausführungsform nach Figur 4,
- Figur 6: eine Draufsicht auf einen Drehmelßel von oben und die Lage entsprechender Schnittdarstellungen,
- Figur 7: den Schnitt A-A aus Figur 6 in nochmals vergrößerter Darstellung,
- Figur 8: den Schnitt B-B aus Figur 6 in nochmals vergrößerter Darstellung,
- Figur 9 a -c: verschiedene Ansichten der Unterlegplatte allein, und
- Figur 10: Die Unterlegplatte gemäß Figur 9b in vergrößerter Darstellung.

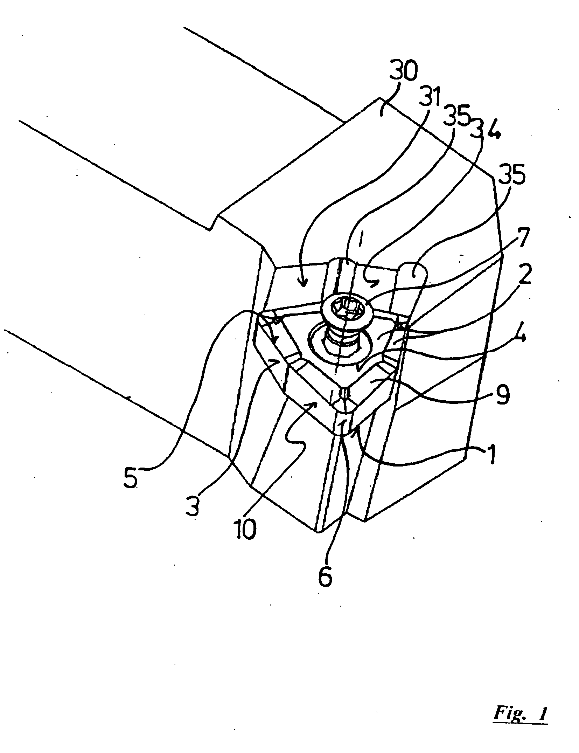

Figur 1 zeigt eine in den Sitz 31 des Drehmeißels 30 eingesetzte Unterlegplatte 10, welche durch eine zentrale Schraube 7 in dem Sitz 31 befestigbar ist. Man erkennt, daß die Unterlegplatte 10 in der Draufsicht eine in etwa dreieckige Grundform mit gebrochenen Seitenflächen 3 hat. Diese Form wird in der Fachwelt auch als Trigon-Form bezeichnet, wobei die Eckbereiche 6 im wesentlichen die Ecken eines gleichseitigen Dreiecks definieren, die Eckenwinkel jedoch, nicht wie bei einem gleichseitigen Dreieck 60°, sondern etwa 80° betragen und stattdessen die sich zwischen den Eckbereichen 6 erstreckenden Seitenflächen 3 um einen Winkel von 20° gebrochen sind, so daß sie einen stumpfen Winkel von etwa 160° miteinander einschließen. Im strengen mathematischen Sinne wäre dies ein Sechseck mit abwechselnden Eckenwinkeln von 80 und 160°, jedoch wird eine solche Form auf dem Gebiet der Schneideinsätze und entsprechender Unterlegplatten als dreieckige Grundform betrachtet.

Die untere Auflagefläche 1, die in Figur 1 nur durch einen halben Pfeil angedeutet wird, da sie in dieser Perspektive nicht sichtbar ist, ist eine im wesentlichen ebene Fläche, wobei die untere Kante am Übergang zu den Seitenflächen 3 auch etwas gebrochen oder angefast sein kann. Entsprechend ist auch die untere, hier nicht sichtbare Fläche des Sitzes 31 eben ausgebildet.

Die obere Fläche der Unterlegplatte 10 wird als Stützfläche 2 bezeichnet. Diese Stützfläche besteht aus einem zentralen, ebenen Plateau 4 und angrenzenden Übergangsflächen 9, die sich zwischen dem zentralen Plateau 4 und den oberen Kanten 5 erstrecken, die am Übergang von den Seitenflächen 3 zur Stützfläche 2 ausgebildet sind. Bei der hier dargestellten Ausführungsform liegt das Plateau 4 oberhalb der Übergangsflächen 9 und der oberen Kanten 5, bezogen auf den Abstand von der unteren Fläche 1. Konkret liegen die oberen Kanten 5 in den Eckbereichen 6 am niedrigsten und erreichen in der Mitte zwischen zwei Ecken, dort wo die Kanten 5 bzw. die Seitenflächen 3 gebrochen sind, ihren höchsten Punkt. Auch dieser Punkt liegt aber noch immer knapp unterhalb des Niveaus des Plateaus 4 oder höchstens gleich hoch.

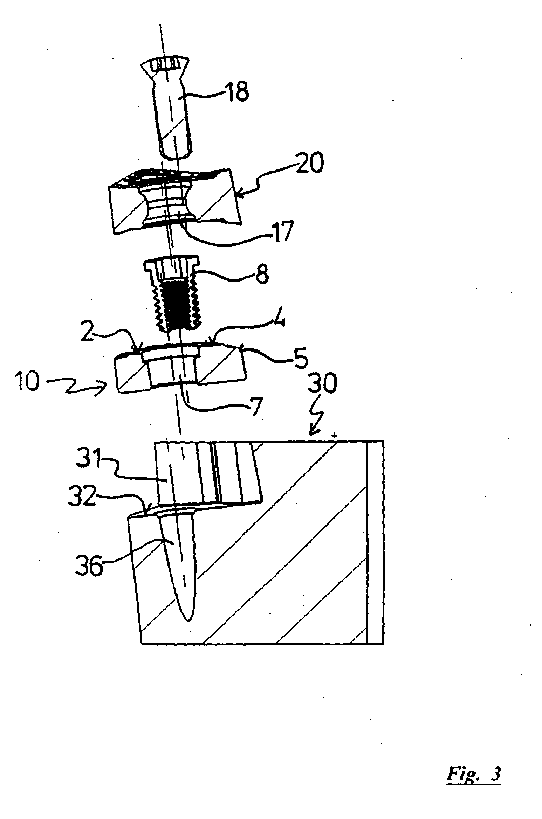

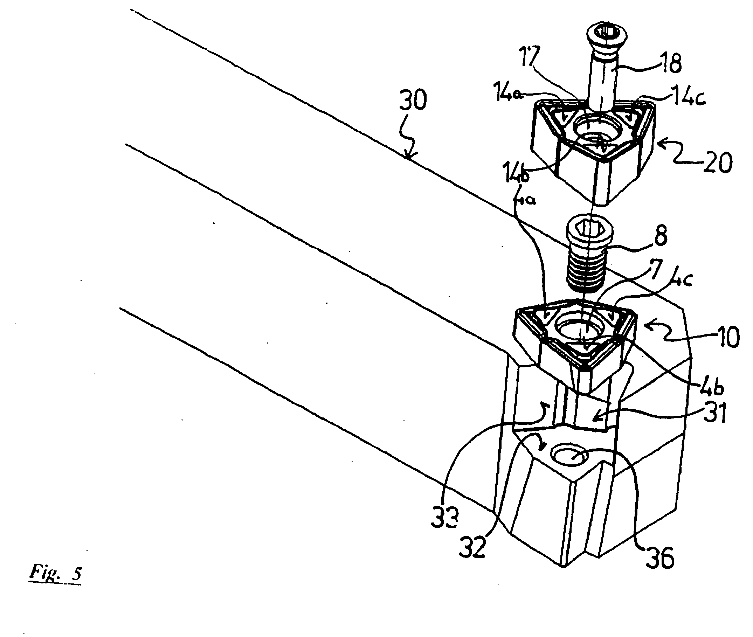

Die Übergangsflächen 9 verlaufen beispielsweise geneigt und eben zwischen dem Rand des zentralen Plateaus 4 und den Kanten 5 und sie können darüber hinaus auch weitere Strukturen, Vertiefungen, Vorsprünge, Abschrägungen und Fasen aufweisen, wie sie teilweise in Figur 1 erkennbar sind. Der äußere Umriß der Platte 10 entspricht genau der Umrißform des Sitzes, d.h. die Seitenflächen 3 liegen, wenn die zentrale Schraube 7 fest angezogen ist, fest an den Seitenflächen 34 des Plattensitzes 31 an, während die untere Fläche 1 auf einer ebenen Auflagefläche 32 (in Figur 3 und 5 erkennbar) aufliegt. Freistiche 35 sorgen dafür, daß die Eckbereiche 6 und die gebrochenen Kanten zwischen den Seltenflächen 3 keinen Kontakt mit den seitlichen Sitzflächen 35 haben, um auf diese Weise die seitliche Anlage möglichst genau zu definieren.

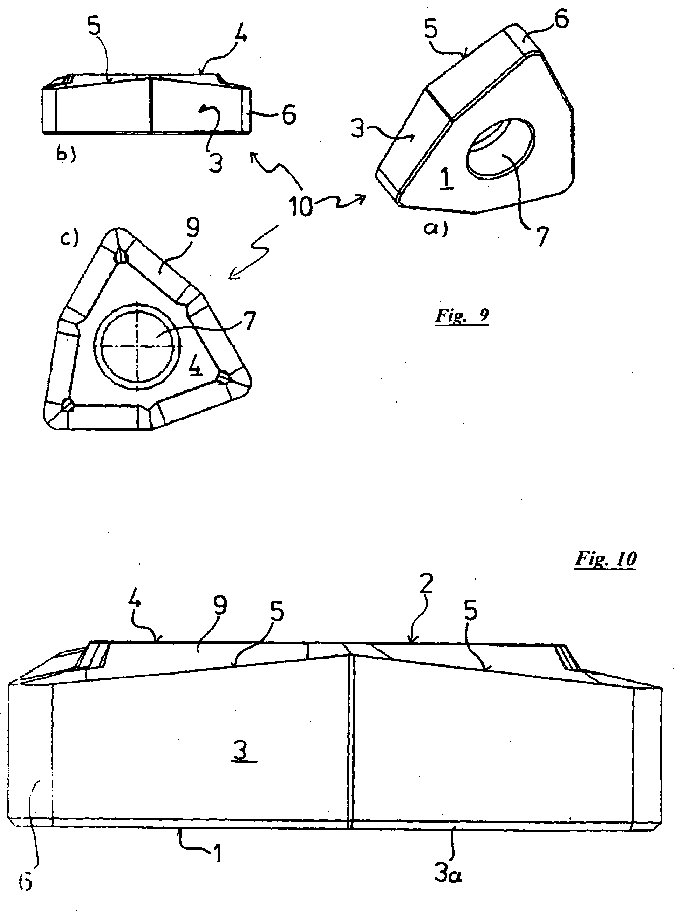

Die vorstehend beschriebene Unterlegplatte 10 ist nochmals in den Figuren 9 und 10 und hier getrennt von der Wendeschneidplatte 20 und dem Plattenhalter bzw. Drehmeißel 30 dargestellt, wobei Figur 9a eine perspektivische Ansicht der Unterlegplatte 10 von der unteren Auflagefläche 1 her ist, Figur 9b eine Seitenansicht ist und Figur 9c eine Draufsicht auf die Unterlegplatte 10 von oben ist. Figur 10 zeigt vergrößert die Seitenansicht gemäß Figur 9b, wobei hier die Fasenfläche 3a am Übergang der Seitenfläche 3 zu der unteren Auflagefläche 1 besser erkennbar ist. Die untere Auflagefläche 1 ist ansonsten eben, während die Oberseite 2 mit der Stützfläche 4 und den Übergangsflächen 9 in etwa komplementär zu der Oberseite eines Schneideinsatzes 20 ausgebildet ist, wobei es für die Übergangsfläche 9 ausreicht, wenn sie lediglich ausreichend Platz für die Aufnahme der komplementären Spanformungs- oder Brechungsstrukturen bietet, ohne diese zu berühren. Im Bereich der gegenüberliegenden Schneidkanten 15 sollten hingegen die oberen Kanten 5 der Unterlegplatte 10 dem in der Höhe variierenden Verlauf dieser Schneidkanten 15 möglichst genau in kleinem Anstand folgen.

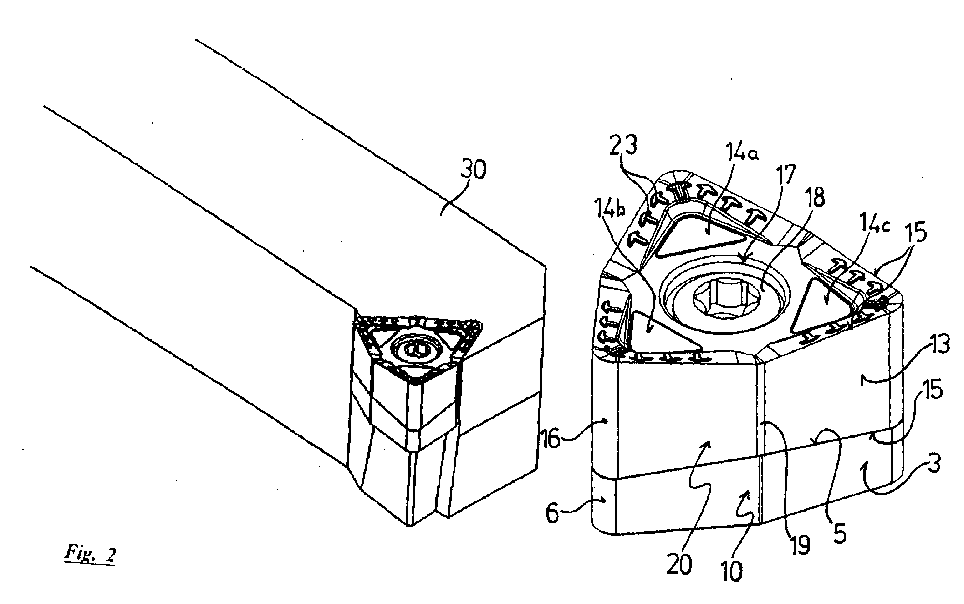

In Figur 2 ist die Unterlegplatte 10 zusammen mit einem Schneideinsatz 20 in einen Drehmeißel 30 eingesetzt erkennbar, wobei die Platte 10 zusammen mit dem darauf aufliegenden Schneideinsatz 20 in vergrößerter Darstellung und ohne den Meißelhalter nochmals getrennt gezeigt ist.

Der Schneideinsatz 20 ist bezüglich einer Mittelebene, die horizontal und parallel zu der unteren Auflagefläche 1 der Unterlegplatte 10 verläuft, symmetrisch ausgebildet, d.h. der um 180° gewendete Schneideinsatz ist von dem hier dargestellten Schneideinsatz nicht zu unterscheiden. Außerdem kann der Schneideinsatz noch jeweils um 60° um seine Achse gedreht werden, um jeweils eine neue Schneidecke und angrenzende Bereiche als aktive Schneidkanten einzusetzen. Üblicherweise werden beim Drehen mit Hilfe eines solchen Schneideinsatzes nur die Schneidkanten im Eckbereich 16 und die unmittelbar benachbarten geraden Schneidkanten 15 verwendet, d.h. maximal bis zu der mittleren Bruchlinie 19, die über einen kleinen Krümmungsradius verläuft.

Der Schneideinsatz hat eine zentrale Bohrung 17, die mit der zentralen Bohrung 7 der Unterlegplatte fluchtet und eine Schraube 18 kann beispielsweise verwendet werden, um gleichzeitig beide Bohrungen 7 und 17 zu durchgreifen und fest auf und in den Plattensitz 31 zu ziehen.

Man beachte, daß in dem vergrößerten Teilbild der Figur 2 die untere Auflagefläche 1 der Platte 10 eben ist und die vordere untere Kante nur aufgrund der perspektivischen Ansicht einen Knick erkennen läßt, wobei die untere Kante dennoch durchgehend in der horizontalen Ebene der Unterseite der Platte liegt. Die obere Kante 5 der Unterlegplatte fällt hingegen von der Bruchlinie 19 in der Mitte zu den Eckbereichen 6 hin ab.

Auf der Oberseite des Schneideinsatzes 20 erkennt man in einem Bereich zwischen der zentralen Bohrung 17 und den Spanförmungsstrukturen der Eckbereiche 16 ebene Auflageflächen 14a, 14b und 14c, die in einer gemeinsamen Ebene liegen und ein Auflageplateau bilden, wenn der Schneideinsatz um 180 ° gewendet ist und mit den Flächen 14a, 14b und 14c auf dem Plateau 4 der darunter liegenden Unterlegplatte 10 (siehe Figur 1) aufliegt. Die Flächen 14a, 14b und 14c sind gegenüber den dazwischen liegenden Bereichen der Oberseite des Schneideinsatzes nur geringfügig erhöht, z. B. um 0,1 mm oder weniger, auch wenn diese Differenz durchaus größer ausfallen könnte. Die Flächen 14a, 14b und 14c nehmen jeweils weniger als ein Zehntel der gesamten oberen Fläche des Schneideinsatzes in Anspruch und sie sind symmetrisch zu der Winkelhalbierenden der jeweils zugehörigen Ecke ausgebildet.

Die Schneidkanten 15 an der Oberseite des Schneideinsatzes haben ihren tiefsten Punkt im Bereich der Bruchlinien der Seitenflächen 13 und sind am höchsten in den Eckbereichen 16, wobei die Schneidkanten im vorliegenden Fall im wesentlichen kontinuierlich entlang einer geraden Linie von der Bruchlinie 19 bis hin zu den Eckbereichen 16 ansteigen. Zwischen dem zentralen Plateau, welches im vorliegenden Fall durch die Flächen 14a, 14b und 14c definiert wird, und den Schneidkanten 15 erkennt man noch Spanformungsstrukturen 23, die für die vorliegende Erfindung nur von untergeordneter Bedeutung sind.

In Figur 3 erkennt man eine Zusammenbauzeichnung bzw. Explosionsdarstellung, welche einen Meißelhalter, eine Unterlegplatte und einen Schneideinsatz im Schnitt darstellt, zusammen mit den zugehörigen Befestigungsschrauben. Der Drehmeißel bzw. Melβelhalter 30 weist einen Plattensitz 31 mit einer unteren Auflage 32 und einer Gewindebohrung 36 auf, die sich senkrecht zu der Auflagefläche 32 in den Meißeihalter 30 hinein erstreckt. Eine Unterlegplatte 10 wird mit Hilfe einer Hohlschraube 8 in dem Plattensitz 31 befestigt, wobei das Außengewinde der Hohlschraube 8 in die Gewindebohrung 36 eingeschraubt wird und ein oberer Kopf oder Rand der Hohlschraube 8 sich auf einem entsprechenden Absatz der zentralen Bohrung 7 der Unterlegplatte 10 abstützt. Der Kopf der Schraube und der Absatz der Bohrung 7 sind so ausgebildet, daß der Kopf vollständig unterhalb des Niveaus des Plateaus auf der Stützfläche 2 der Platte 10 abgesenkt ist. Auf diese Unterlegplatte wird dann eine doppelseitige Wendeschneidplatte aufgelegt und mit Hilfe einer Schraube 18, welche die Bohrung 17 der Wendeschneidplatte durchgreift, an der Hohlschraube 8 der Unterfegplatte 10 befestigt, indem die Schraube 18 in das Innengewinde der Hohlschraube 8 eingeschraubt wird.

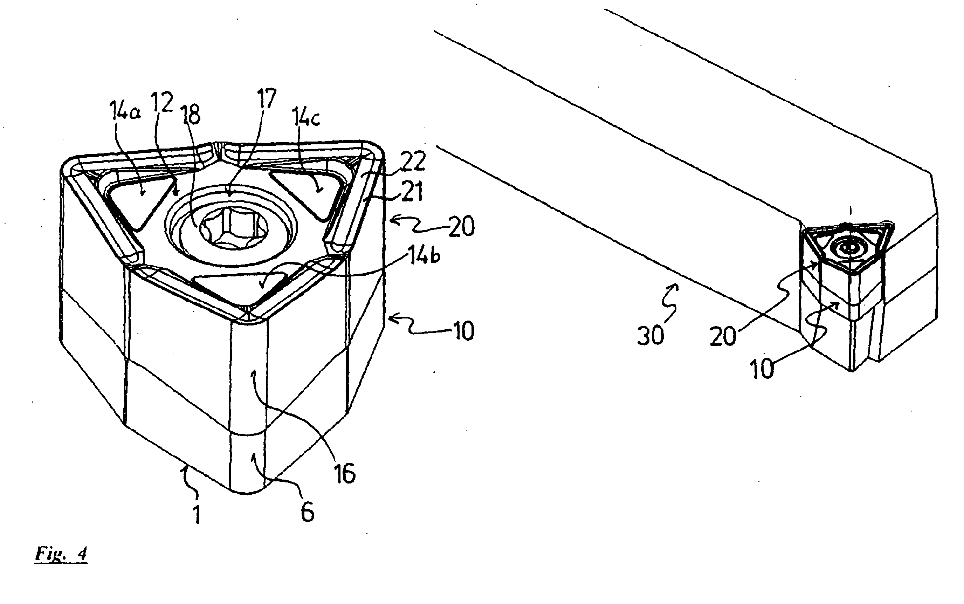

In Figur 4 erkennt man nochmals einen Drehmeißel mit einer eingesetzten Unterlegplatte und Wendeschneidplatte, die getrennt vergrößert dargestellt sind, wobei die hier dargestellte Version der Wendeschneidplatte sich von der zuvor dargestellten lediglich durch die Struktur der Spanformungsbereiche 21, 22 unterscheidet, die in dieser Ausführungsform als Doppelmulde ausgebildet sind. Auch in dieser Ausführungsform erkennt man wieder drei den Eckbereichen 16 zugeordnete, obere ebene Flächen 14a, 14b und 14c, die ein gemeinsames Auflageplateau definieren, das nach dem Wende der Schneidplatte um 180 ° mit dem darunter liegenden Plateau der Unterlegplatte 10 in Eingriff kommt.

Figur 5 zeigt nochmals eine perspektivische Explosionsdarstellung eines Drehmeißels bzw. Melβelhalters 30 mit der einzusetzenden Unterlegplatte, einer Wendeschneidplatte 20 und den entsprechenden Befestigungsschrauben 8 bzw. 18. Wie man in diesem Ausführungsbeispiel erkennt, hat hier die Unterlegplatte 10 analog zu den Plateauflächen 14a, 14b und 14c des Wendeschneideinsatzes getrennte Auflageflächen 4a, 4b und 4c, welche das obere zentrale Plateau der Unterlegplatte 10 definieren. Der Begriff "zentral" bezieht sich dabei darauf, daß diese Auflageflächen 4a, 4b und 4c von den oberen Kanten 5 entfernt und näher zum Zentrum der Unterlegplatte 10 angeordnet sind, ohne daß sie sich tatsächlich im eigentlichen Zentrum der Platte 10 befinden, wo das Bohrloch 7 vorgesehen ist. Die Auflageflächen 4a, 4b und 4c sind ebenso wie die entsprechenden Auflageflächen 14a, 14b und 14c des Schneideinsatzes den jeweiligen Ecken der in der Grundform dreieckigen Platte bzw. dem in der Grundform dreieckigen Schneideinsatz zugeordnet, wobei die Flächen 4a, 4b und 4c gegenüber der zugeordneten Ecke symmetrisch ausgebildet sind, ebenso wie dies auch für die Flächen 14a, 14b und 14c gilt, die bezüglich der entsprechenden Schneidecken 16, genauer gesagt einer Winkelhalbierenden der Schneidecken 18, symmetrisch ausgebildet sind.

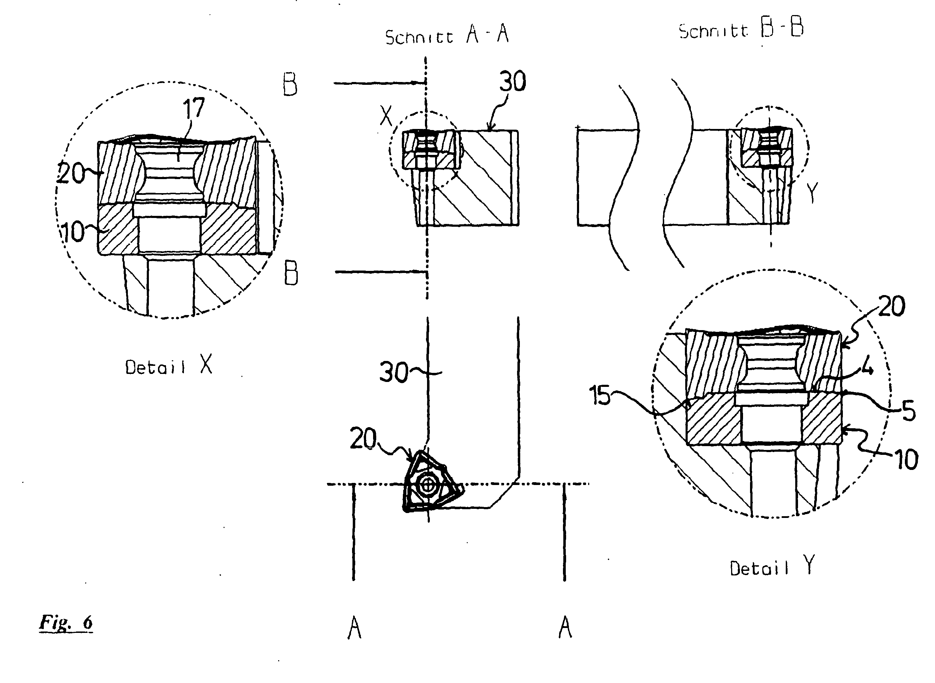

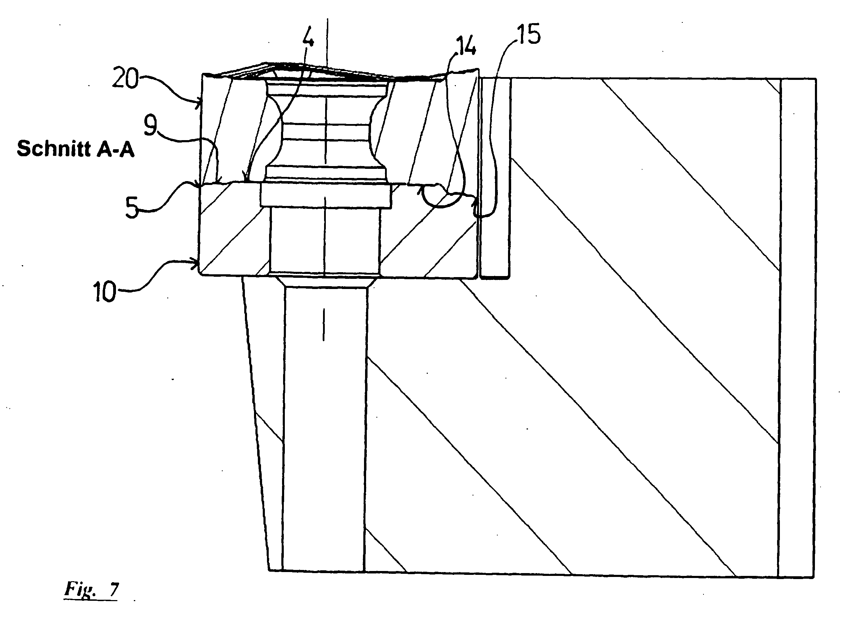

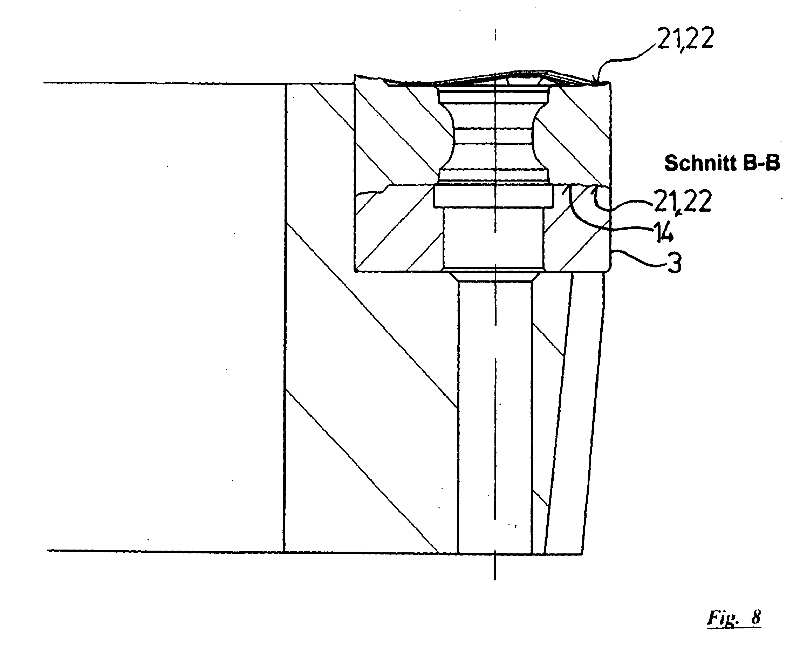

Bei der hier dargestellten Unterlegplatte 10 sind außerdem die verbleibenden Teile der Stützflächen zwischen den zentralen Auflageflächen 7 und den oberen Kanten 5 komplementär zu den entsprechenden Spanmulden des Schneideinsatzes ausgebildet Dies wird noch besser verdeutlicht in den Schnittansichten gemäß Figur 6, die einen Schneideinsatz in der Draufsicht und mit der Lage zweier zugehöriger Schnitte zeigt, wie man in den Teilbildern der Figur 6 und in den Figuren 7 und 8 erkennen kann.

Die Oberseite der Platte 10 ist demnach über die gesamte Fläche hinweg komplementär zu der unteren Seite bzw. einer beliebigen Seite des Schneideinsatzes 20 ausgebildet und weist den Spanmulden entsprechend, wulstartige Erhebungen auf, die je nach Position und Lage im Verhältnis zu einer Schneidecke unterschiedlich tief und unterschiedlich breit ausgebildet sind. Im Ergebnis verbleibt zwischen der unteren Fläche eines Schneideinsatzes 20 und der oberen Fläche 2 einer Unterlegplatte 10 außerhalb des zentralen Auflageplateaus 4 nur ein geringfüglger lichter Abstand, der vorzugsweise an keiner Stelle einen Betrag von 0,5 mm überschreitet oder auch noch geringer ist.

Wie man außerdem anhand der Figuren 2 und 4 deutlich erkennen kann, liegen die oberen Kanten 5 der Unterlegplatte 10 und die unmittelbar gegenüberliegenden unteren Schneidkanten 15 der Wendeschneidplatten 20 unmittelbar dicht nebeneinander, so daß der dazwischen verbleibende Spalt in den Figuren praktisch nicht erkennbar ist da er in der Tat in einer bevorzugten Ausführungsform der Erfindung nur zwischen 0,1 und 0,2 mm beträgt.

Außerdem entspricht die Umrißkontur des Schneideinsatzes exakt der Umrißkontur der Unterlegplatte 10 oder umgekehrt, so daß die jeweils übereinanderliegenden Seitenflächen 3 und 13 in einer gemeinsamen Ebene liegen. Auch die in etwa zylindrisch abgerundeten Eckbereichsflächen 6 bzw. 16 liegen vorzugsweise auf einer gemeinsamen Zylindermantelfläche, wobei allerdings die den Eckbereich 18 definierende Zylindermantelfläche 16 gegenüber der Zylindermantelfläche 6 etwas, d.h. um maximal 0,2 bis 0,3 mm, überstehen kann.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Kombination aus einer Unterlegplatte (10) und einem doppelseitigen Wendeschneideinsatz (20), wobei der Wendeschneideinsatz (20) in einem Sitz (31) eines Werkzeuges (30) aufnehmbar ist und fixierbar ist und die Unterlegplatte (10) dabei zwischen dem Wendeschneideinsatz (20) und einer Fläche (32) des Sitzes (31) liegt, wobei der Wendeschneideinsatz (20) auf der Unterlegplatte (10) in dem Sitz (31) zu fixieren ist, und wobei die Unterlegplatte (10) eine plattenartige Grundform mit einem runden oder polygonalen Umriß und einer unteren, auf eine Fläche (32) des Sitzes (31) auflegbaren, im allgemeinen ebenen Auflagefläche (1) und einer oberen, den Wendenschneideinsatz (20) tragenden Stützfläche (2), wobei Auflagefläche (1) und Stützfläche (2) durch den Umfang definierende Seitenwände (3) miteinander verbunden sind, und wobei der Wendeschneideinsatz (20) ein innerhalb der Schneidkanten (15) und im Abstand von diesen liegendes, durch eine oder mehrere ebene Auflageflächen definiertes Plateau (14) aufweist **dadurch gekennzeichnet, daß** die durch den Übergang von den Seitenwänden (3) zu der Stützfläche (2) gebildeten oberen Kanten (5) der Unterlegplatte (10) und die Schneidkanten (15) auf der der Unterlegplatte (10) zugewandten Seite des Wendeschneideinsatzes (20) mindestens in dem Bereich unterhalb einer aktiven Schneidkante (15) und den daran angrenzenden Bereichen einen Abstand von höchstens 0,5 mm voneinander und einen variierenden Abstand von der Ebene des Plateaus (14) haben, wobei die oberen Kanten der Unterlegplatte einem Negativ des Schneidkantenverlauf des damit zu stützenden Schneideinsatzes entsprechen.

2. Kombination nach Anspruch 1, **dadurch gekennzeichnet, daß** oberen Kanten (5) der Unterlegplatte (10) und die diesen benachbarten Schneidkanten (15) gegenüber der Ebene der unteren Auflagefläche einen variierenden Abstand haben wobei die oberen Kanten (5) und die Schneidkanten (15) vorzugsweise ganz oder überwiegend und zumindest in den Eckbereichen eines polygonalen Umrisses von der Ebene der Auflagefläche (1) einen kleineren Abstand haben als die aneinanderliegenden Plateaus (4, 14) der Stützfläche (2) bzw. des Schneideinsatzes (20).

3. Kombination nach Anspruch 1 oder 2, **dadurch gekennzeichnet, daß** die der Unterlegplatte zugewandten Schneidkante und die oberen Kanten der Unterlegplatte in den unterhalb aktiver Scheidkantenbereiche liegenden und angrenzenden Bereichen einen Abstand von weniger als 0,3 mm, vorzugsweise von weniger als 0,2 mm, und insbesondere von etwa 0,15 mm haben.

4. Kombination nach einem der Ansprüche 1 bis 3, **dadurch gekennzeichnet, daß** der Wendeschneideinsatz und die Unterlegplatte ggf. mit Ausnahme der Eckenradien dieselben Umfangskonturen und in etwa dieselben Umfangsmaße haben, wobei die der Unterlegplatte zugewandten Schneidkanten (15) und die oberen Kanten (5) der Unterlegplatte entlang des gesamten Umfanges einen Abstand entsprechend Anspruch 3 voneinander haben.

5. Kombination nach einem der Ansprüche 1 bis 4, **dadurch gekennzeichnet, daß** neben den Schneidkanten (15) und unteren Kanten (5) der Unterlegplatte auch die Konturen der Spanformungsbereiche auf der der Unterlegplatte zugewandten Seite des Wendeschneideinsatzes und die Konturen der entsprechenden, gegenüberliegenden Stützfläche der Unterlegplatte so aneinander angepaßt sind, daß sie einen maximalen lichten Abstand von 0,5 mm, vorzugsweise von 0,3 mm oder weniger voneinander haben.

6. Kombination nach einem der Ansprüche 1 bis 5, **dadurch gekennzeichnet, daß** die Seitenflächen (3) der Unterlegplatte (10) gegenüber den Seitenflächen (13) des Schneideinsatzes (20) um maximal 0,5 mm, vorzugsweise maximal 0,2 mm überstehen.

7. Kombination nach einem der Ansprüche 1 bis 6, **dadurch gekennzeichnet, daß** das Plateau (14) der Auflagefläche des Wendeschneideinsatzes (20) definiert wird durch mindestens drei voneinander beabstandete, ebene Flächenabschnitte (14a, 14b, 14c), die zwischen dem Zentrum des Wendeschneideinsatzes (20) und der Schneidkante (15) des Wendeschneideinsatzes und dem Abstand von der Schneidkante (15) angeordnet sind und die durch tieferliegende Bereiche der Auflagefläche voneinander getrennt sind.

8. Kombination nach Anspruch 7, **dadurch gekennzeichnet, daß** die ebenen Flächeabschnitte jeweils dem Eckbereich eines polygonalen Umrisses zugeordnet sind, wobei jeder Flächenabschnitt vorzugsweise symmetrisch bezüglich einer Winkelhalbierenden der betreffenden Ecke angeordnet ist.

9. Werkzeug zur Aufnahme mindestens eines doppelseitigen Wendeschneideinsatzes, **dadurch gekennzeichnet, daß** es einen Sitz für die Aufnahme einer Unterlegplatte und eine Unterlegplatte in Kombination mit einer Wendeschneidplatte nach einem der Ansprüche 1 bis 8 aufweist.

## Claims

1. A combination comprising a support plate (10) and a double-sided indexable cutting insert (20), wherein the indexable cutting insert (20) can be received and fixed in a seat (31) of a tool (30) and in that case the support plate (10) is between the indexable cutting insert (20) and a face (32) of the seat (31), wherein the indexable cutting insert (20) is to be fixed on the support plate (10) in a seat (31) and wherein the support plate (10) is of a plate-like basic shape of a round or polygonal outline and with a lower generally flat contact face (1) which can be placed on a face (32) of the seat (31) and an upper support face (2) carrying the indexable cutting insert (20), wherein the contact face (1) and the support face (2) are connected together by side walls (3) defining the periphery, and wherein the indexable cutting insert (20) has a plateau (14) which is disposed within the cutting edges (15) and at a spacing therefrom and which is defined by one or more flat contact faces, **characterised in that** the upper edges (15) of the support plate (10), that are formed by the transition from the side walls (3) to the support face (2), and the cutting edges (15) on the side of the indexable cutting insert (20), that is towards the support plate (10), are at a spacing of at most 0.5 mm from each other at least in the region beneath an active cutting edge (15) and the regions adjoining same wherein the upper edges (5) of said support plate (10) correspond to a negative of the cutting edge configuration of the cutting insert (20) to be supported therewith.

2. A combination according to claim 1 **characterised in that** the upper edges (5) of the support plate (10) and the cutting edges (15) adjacent thereto involve a varying spacing relative to the plane of the lower contact face, wherein the upper edges (5) and the cutting edges (15) preferably entirely or predominantly and at least in the corner regions of a polygonal outline are at a smaller spacing from the plane of the contact face (1) than the plateaux (4, 14), which bear against each other, of the support face (2) and the cutting insert (20) respectively.

3. A combination according to claim 1 or claim 2 **characterised in that** the cutting edge towards the support plate and the upper edges of the support plate, in the adjoining regions beneath active cutting edge regions, are at a spacing of less than 0.3 mm, preferably less than 0.2 mm and in particular about 0.15 mm.

4. A combination according to one of claims 1 to 3 **characterised in that** the indexable cutting insert and the support plate, possibly with the exception of the corner radii, are of the same peripheral contours and approximately the same peripheral dimensions, wherein the cutting edges (15) towards the support plate and the upper edges (5) of the support plate are at a spacing from each other, along the entire periphery, corresponding to claim 3.

5. A combination according to one of claims 1 to 4 **characterised in that** besides the cutting edges (15) and the lower edges (5) of the support plate the contours of the chipforming regions on the side of the indexable cutting insert, that is towards the support plate, and the contours of the corresponding opposite support face of the support plate are so matched to each other that they are at a maximum internal spacing from each other of 0.5 mm, preferably 0.3 mm or less.

6. A combination according to one of claims 1 to 5 **characterised in that** the side faces (3) of the support plate (10) project with respect to the side faces (13) of the cutting insert (20) by a maximum of 0.5 mm, preferably a maximum of 0.2 mm.

7. A combination according to one of claims 1 to 6 **characterised in that** the plateau (14) of the contact face of the indexable cutting insert (20) is defined by at least three mutually spaced flat face portions (14a, 14b, 14c) which are arranged between the centre of the indexable cutting insert (20) and the cutting edge (15) of the indexable cutting insert and the spacing from the cutting edge (15) and are separated from each other by lower regions of the contact face.

8. A combination according to claim 7 **characterised in that** the flat face portions are respectively associated with the corner region of a polygonal outline, wherein each face portion is preferably arranged symmetrically with respect to an angle bisector of the corner in question.

9. A tool for receiving at least one double-sided indexable cutting insert, **characterised in that** it has a seat for receiving a support plate in combination with a support plate according to one of claims 1 to 8.

## Revendications

1. Combinaison d'une plaquette de support (10) et d'un insert de coupe réversible (20), l'insert de coupe réversible (20) pouvant être reçu et fixé dans un siège (31) d'un outil (30) et la plaquette de support (10) se trouvant alors entre l'insert de coupe réversible (20) et une face (32) du siège (31), l'insert de coupe réversible (20) devant être fixé sur la plaquette de support (10) dans le siège (31), et la plaquette de support (10) ayant une forme de base de type plaquette présentant un contour rond ou polygonal et une face d'appui inférieure (1), de forme générale plane, qui peut être placée sur une face (32) du siège (31), et une face de support supérieure (2) portant l'insert de coupe réversible (20), la face d'appui (1) et la face de support (2) étant reliées l'une à l'autre par des parois latérales (3) définissant la périphérie, et l'insert de coupe réversible (20) possédant un plateau (14) défini par une ou plusieurs faces d'appui planes et se trouvant à l'intérieur des arêtes de coupe (15) à distance de celles-ci, **caractérisée en ce que** les arêtes supérieures de la plaquette de support (10), lesquelles sont formées par la transition allant des parois latérales (3) à la face de support (2), et les arêtes de coupe (15) du côté de l'insert de coupe réversible (20) dirigé vers la plaquette de support (10) se trouvent, au moins dans la région au-dessous de l'arête de coupe active (15) et des régions adjacentes à celle-ci, à une distance de 0,5 mm maximum l'une de l'autre et à une distance variable du plan du plateau (14), les arêtes supérieures de la plaquette de support correspondant à un négatif de l'allure des arêtes de coupe de l'insert de coupe qui doit être supporté par ladite plaquette de support.

2. Combinaison selon la revendication 1, **caractérisée en ce que** des arêtes supérieures (5) de la plaquette de support (10) et les arêtes de coupe (15) adjacentes à celles-ci se trouvent à une distance variable du plan de la face d'appui inférieure, les arêtes supérieures (5) et les arêtes de coupe (15) se trouvent, avantageusement entièrement ou en grande partie et au moins dans les régions en coin d'un contour polygonal, à une distance du plan de la face d'appui (1) qui est inférieure à la distance des plateaux adjacents (4, 14) de la face de support (2) resp. de l'insert de coupe (20).

3. Combinaison selon la revendication 1 ou 2, **caractérisée en ce que** l'arête de coupe qui est dirigée vers la plaquette de support et les arêtes supérieures de la plaquette de support sont espacées de moins de 0,3 mm, avantageusement de moins de 0,2 mm, et notamment d'environ 0,15 mm, dans les régions au-dessous de régions d'arête de coupe actives et les régions adjacentes.

4. Combinaison selon l'une des revendications 1 à 3, **caractérisée en ce que** l'insert de coupe réversible et la plaquette de support ont, le cas échéant à l'exception des rayons en coin de celles-ci, les mêmes contours périphériques et à peu près les mêmes dimensions périphériques, les arêtes de coupe (15) dirigées vers la plaquette de support et les arêtes supérieures (5) de la plaquette de support étant espacées l'une de l'autre sur toute la périphérie conformément au revendication 3.

5. Combinaison selon l'une des revendications 1 à 4, **caractérisée en ce que**, outre les arêtes de coupe 15) et les arêtes inférieures (5) de la plaquette de support, les contours des régions de formation de copeaux du côté de l'insert de coupe réversible dirigé vers la plaquette de support et les contours de la face de support correspondante opposée de la plaquette de support sont adaptés l'un à l'autre de telle sorte qu'ils sont espacés l'un de l'autre de 0,5 mm maximum, avantageusement de 0,3 mm ou moins.

6. Combinaison selon l'une des revendications 1 à 5, **caractérisée en ce que** les faces latérales (3) de la plaquette de support (10) font saillie de 0,5 mm maximum, avantageusement de 0,2 mm maximum, des faces latérales (13) de l'insert de coupe (20).

7. Combinaison selon l'une des revendications 1 à 5, **caractérisée en ce que** le plateau (14) de la face d'appui de l'insert de coupe réversible (20) est défini par au moins trois portions de face planes (14a, 14b, 14c), espacées l'une de l'autre, qui sont disposées entre le centre de l'insert de coupe réversible (20) et l'arête de coupe (15) de l'insert de coupe réversible et à distance de l'arête de coupe (15) et qui sont séparées l'une de l'autre par des régions plus profondes de la face d'appui.

8. Combinaison selon la revendication 7, **caractérisée en ce que** les portions de face planes sont associées chacune à la région en coin d'un contour polygonal, chaque portion de face étant disposée avantageusement symétriquement par rapport à une bissectrice du coin concerné.

9. Outil destiné à recevoir au moins un insert de coupe réversible double face, **caractérisé en ce qu'**il possède un siège destiné à recevoir une plaquette de support et une plaquette de support en combinaison avec une plaquette de coupe réversible selon les revendications 1 à 8.
